Europäisches Patentamt

European Patent Office

Office européen des brevets

(19)

(11)  EP 0 567 393 B1

(12)  FASCICULE DE BREVET EUROPEEN

(45) Date de publication et mention
de la délivrance du brevet:
**27.11.1996  Bulletin 1996/48**

(51) Int Cl.⁶: **F25B 39/02**, F28F 3/04,
F28F 13/18, B01D 1/22

(21) Numéro de dépôt: **93401026.5**

(22) Date de dépôt: **21.04.1993**

(54) **Evaporateur à plaques à hautes performances thermiques fonctionnant en régime d'ébullition nucléée**

Thermischer Hochleistungsplattenverdampfer in Blasensiedebetrieb

High thermal performance plate evaporator working under nucleate boiling conditions

(84) Etats contractants désignés:
**DE ES GB IT SE**

(30) Priorité: **23.04.1992  FR 9205012**

(43) Date de publication de la demande:
**27.10.1993  Bulletin 1993/43**

(73) Titulaire: **COMMISSARIAT A L'ENERGIE
ATOMIQUE
75015 Paris (FR)**

(72) Inventeurs:
 • **Marvillet, Christophe
F-38000 Grenoble (FR)**
 • **Lauro, Fernand
F-38000 Grenoble (FR)**
 • **Bandelier, Philippe
F-38240 Meylan (FR)**

(74) Mandataire: **Dubois-Chabert, Guy et al
c/o BREVATOME
25, rue de Ponthieu
75008 Paris (FR)**

(56) Documents cités:
 **EP-A- 0 053 452          EP-A- 0 186 592
 BE-A- 516 447            FR-A- 1 349 387
 FR-A- 2 125 471          FR-A- 2 591 504
 FR-E- 57 956             US-A- 3 568 462
 US-A- 3 852 166          US-A- 4 371 034**

 • **PATENT ABSTRACTS OF JAPAN vol. 7, no. 95
   (M-209) 21 Avril 1983 & JP-A-58 018 094 (HITACHI
   SEISAKUSHO) 2 Février 1983**
 • **HEAT TRANSFER ENGINEERING vol. 2, no. 3-4,
   1981, WASHINGTON pages 46 - 69 WEBB 'THE
   EVOLUTION OF ENHANCED SURFACE
   GEOMETRIES FOR NUCLEATE BOILING'**

## Description

La présente invention se rapporte d'une manière générale aux échangeurs de chaleur à plaques fonctionnant comme évaporateurs.

Elle a pour but essentiellement d'augmenter les performances thermiques de tels appareils connus, c'est-à-dire d'accroître leur coefficient global d'échanges tout en limitant, dans la mesure du possible, la perte de pression que subissent les fluides qui les traverse.

Les avantages d'une performance thermique élevée pour les échangeurs de chaleur en général, sont évidents et l'on peut citer par exemple :

- la réduction de la surface d'échange pour des conditions opératoires imposées et un gain de matière première, souvent coûteuse dans le cas de fluides corrosifs ;
- la réduction du volume de fluide contenu dans l'appareil : cet aspect est important lorsque le fluide calovecteur est coûteux, toxique ou dangereux. Les systèmes utilisant les fluides frigorigènes (CFC, HCFC, HFA) (pompes à chaleur, climatiseurs, groupes de réfrigération) dont la production est limitée pour les uns ou le coût élevé pour les autres sont susceptibles alors d'avoir des échangeurs plus compacts ;
- l'augmentation de l'efficacité énergétique des procédés industriels dans lesquels ces échangeurs à haute performance sont intégrés.

L'invention s'applique encore de façon plus particulière parmi ces évaporateurs à plaques à ceux qui sont du type noyés, c'est-à-dire dans lesquels la surface d'échange thermique est immergée au sein du liquide à vaporiser et de façon plus particulière encore, à ceux de ces évaporateurs qui fonctionnent en régime d'ébullition nucléée, c'est-à-dire dans lesquels les bulles de vapeur discrètes se forment dans le liquide à vaporiser au contact avec la surface chauffée. Elle peut s'appliquer également aux évaporateurs du type à recirculation dans lesquels le mode de transfert de la chaleur est mixte et combine l'ébullition nucléée précédente et la convection.

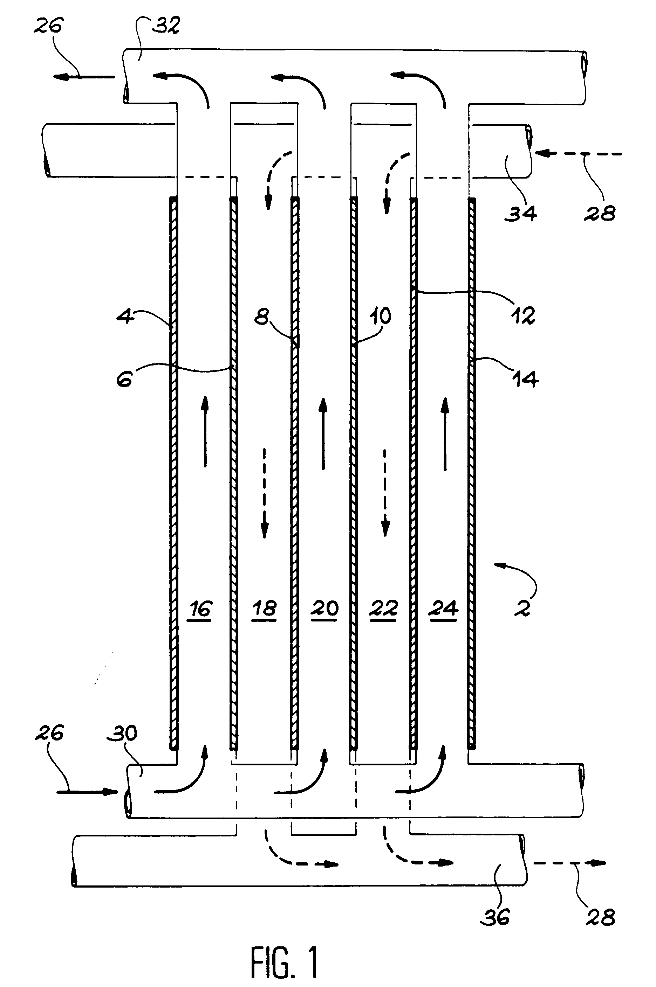

On commencera d'abord par rappeler, en se référant à la figure 1, la structure connue d'un évaporateur à plaques d'un type classique. Sur la figure 1, on voit représentée une structure d'échange 2 composée de plaques métalliques planes et parallèles 4, 6, 8, 10, 12 et 14, constituant des casiers successifs 16, 18, 20, 22 et 24, juxtaposés les uns à côté des autres et parcourus alternativement par le fluide chauffant 28 et le fluide à vaporiser 26. Des collecteurs d'entrée 30 et de sortie 32 véhiculent le fluide à vaporiser et des collecteurs d'entrée 34 et de sortie 36, le fluide chaud. Le réglage des différents paramètres de fonctionnement de l'appareil permet d'obtenir ainsi, selon les cas, à la sortie du collecteur 32, soit un mélange diphasique liquide-vapeur, soit même de la vapeur seule.

La présente invention a précisément pour objet un évaporateur à plaques, à performances thermiques augmentées, à l'aide d'une structure dérivée de la structure de la figure 1 précédente, de réalisation et de mise en oeuvre particulièrement simple.

Cet évaporateur à plaques à hautes performances thermiques fonctionnant en régime d'ébullition nucléée ou mixte d'un liquide déterminé, comprenant des canaux d'écoulement de fluide chaud et des canaux d'écoulement d'un liquide à vaporiser déterminé, ces canaux étant définis par les casiers d'une structure de plaques métalliques planes et parallèles (37, 38) juxtaposées, caractérisé en ce que, sur une partie comprise entre 0,3 et 0, 9 fois leur étendue, les canaux (35) du liquide à vaporiser comprennent des espaces confinés (46), localisés de place en place, dont l'épaisseur restreinte offerte à l'écoulement est au plus égale à une valeur D représentant le diamètre d'une bulle de vapeur du liquide à vaporiser déterminé et se formant sur la paroi d'une plaque chaude lors de l'ébullition nucléée, cette valeur D étant donnée par la formule :

$$D = 1,83 \left( \sigma/9,81\rho \right)^{\frac{1}{2}}$$

où $\sigma$ et $\rho$ sont respectivement la tension superficielle et la masse volumique du liquide à vaporiser déterminé.

Le demandeur a en effet mis en évidence qu'en contraignant une partie au moins du liquide à vaporiser à traverser des espaces confinés, c'est-à-dire dont la section droite dans le sens perpendiculaire à l'écoulement est limité par rapport à la section qu'offre un canal parallélépipédique, conduisait, moyennant certains rapport dimensionnels, à une augmentation très importante, comme on le verra plus loin, du coefficient d'échange, c'est-à-dire en fin de compte du rendement de l'appareil.

Selon une caractéristique importante de la présente invention, l'épaisseur offerte par ces espaces confinés à l'écoulement du liquide à vaporiser doit être comprise entre le diamètre d'une bulle de vapeur et la cinquième partie environ de ce même diamètre. Le diamètre d'une telle bulle de vapeur dans un régime d'ébullition nucléée se calcule facilement à l'aide de la formule approchée suivante :

$$D = 1,83(\sigma/9,81\rho)^{\frac{1}{2}}$$

formule dans laquelle $\sigma$ et $\rho$ sont respectivement la tension superficielle et la masse volumique de la phase liquide à évaporer, les unités étant celles du système international en vigueur, c'est-à-dire

D en m
$\sigma$ en N/m
$\rho$ en Kg/m$^3$

La constante 1,83 dépend de la mouillabilité de la surface métallique par le fluide à vaporiser. Il est bien connu que le diamètre précédent est fortement dépendant du fluide à évaporer ainsi que de la pression d'évaporation. Ainsi pour l'eau à 20°C, ce diamètre est de 5 mm, pour l'eau à 100°C, il est de 4,6 mm et pour un fluide frigorigène connu, le R113, à 50°C il n'est plus que de 1,9 mm. L'étude de l'effet d'augmentation du coefficient d'échange, obtenu par les moyens objet de l'invention, a montré que ce diamètre, qui ne doit pas excéder celui d'une bulle de vapeur, peut en revanche descendre jusqu'à des valeurs voisines de l'ordre du 5è de ce diamètre ainsi calculé.

Selon une autre caractéristique importante de la présente invention, les espaces confinés ne doivent pas occuper l'intégralité de la surface des plaques chauffantes, mais occuper une surface totale comprise entre 0,3 et 0,9 fois la surface totale d'une plaque d'échange. C'est la raison pour laquelle ils sont localisés sous forme discrète sur chaque plaque chauffante selon différentes dispositions qui font partie de la présente invention et qui seront décrites plus en détail dans la suite du présent texte.

Selon un premier mode de mise en oeuvre de l'invention, les espaces confinés sont réalisés par des emboutissages localisés de l'une des plaques de chaque canal de liquide à vaporiser, une partie de cette plaque emboutie venant en contact ponctuel ou rectiligne avec la plaque associée du même canal pour augmenter la rigidité mécanique et la tenue à la pression de la structure. Ce mode de réalisation des espaces confinés localisés est particulièrement simple car une simple machine à emboutir permet de déformer les plaques d'échange selon le schéma voulu ; de plus, ce mode de réalisation présente l'avantage de pouvoir utiliser certaines parties des plaques embouties pour renforcer selon des points espacés ou selon des lignes, la rigidité mécanique de la structure.

Selon un deuxième mode, également très important, de mise en oeuvre de l'invention, les espaces confinés sont réalisés à l'aide d'une surface d'échange secondaire constituée par une plaque métallique secondaire de forme appropriée pour se déployer en accordéon, dans un canal du liquide à vaporiser, en prenant appui alternativement sur chacune des parois de ce canal. Ce mode de mise en oeuvre d'une réalisation légèrement plus compliquée que la précédente, nécessite par conséquent l'introduction dans les canaux du liquide à vaporiser d'une plaque métallique secondaire, le plus souvent déployée en accordéon et prenant appui alternativement sur chacune des deux parois de ce même canal. A partir de cette structure, deux variantes de mise en oeuvre peuvent à leur tour être envisagées.

Dans la première variante, les espaces confinés sont réalisés uniquement sur la plaque secondaire qui possède à cet effet des nappes resserrées ;

Dans une seconde variante de mise en oeuvre, lesdits espaces confinés sont réalisés directement entre la paroi du canal et la plaque secondaire qui est à cet effet soit appuyée, soit soudée de place en place sur la plaque chauffante du canal du liquide à vaporiser.

Dans l'une comme dans l'autre des deux variantes de mise en oeuvre précédentes, on prévoit des ouies d'entrée du liquide à vaporiser et de sortie de vapeur de place en place sur la plaque secondaire en direction des espaces confinés. Cette disposition est en effet nécessaire pour d'une part évacuer le maximum de vapeur produite et d'autre part pour contraindre le liquide à vaporiser à pénétrer et à circuler dans les espaces confinés, qu'il aurait tendance naturellement à court-circuiter pour utiliser les trajets d'écoulement les plus faciles dont il résulterait un assèchement néfaste des zones confinées.

Enfin, selon une caractéristique également importante de la présente invention, un mode de mise en oeuvre particulier de celle-ci est réalisé en constituant le canal d'écoulement du liquide à vaporiser par la juxtaposition de deux plaques globalement planes mais de surface ondulée ayant le même pas d'ondulation et associées de façon telle que les directions de ces ondulations fasse un angle aigu l'une avec l'autre.

De toute façon l'invention sera mieux comprise en se référant à la description qui suit de plusieurs exemples de mise en oeuvre, exemples qui seront donnés à titre illustratif et non limitatif en se référant aux figures 2 à 7 ci-jointes, sur lesquelles :

- la figure 2 est un exemple d'évaporateurs à plaques selon l'invention, dans lequel les espaces confinés sont réalisés par emboutissage localisé ;
- la figure 3 représente une autre variante de mise en oeuvre dans laquelle les espaces confinés sont également réalisés par emboutissage avec, dans la variante de la partie droite de la figure 3, la présence d'ouies d'introduction de la phase liquide dans cet espace ;
- la figure 4 est un premier exemple de mise en oeuvre de l'invention dans lequel des espaces confinés sont réalisés à l'aide d'une plaque métallique secondaire ;
- la figure 5 est un autre mode de mise en oeuvre de l'invention où l'on recourt également à une plaque métallique secondaire, les espaces confinés étant réalisés entre la paroi du canal et la plaque secondaire ;
- la figure 6 est relative à un mode de mise en oeuvre de l'invention où l'on réalise le confinement du liquide à vaporiser par juxtaposition de deux plaques ondulées ;
- la figure 7 est un schéma montrant les différentes valeurs du coefficient d'échange global en fonction du flux thermique pour plusieurs valeurs d'épaisseur de confinement.

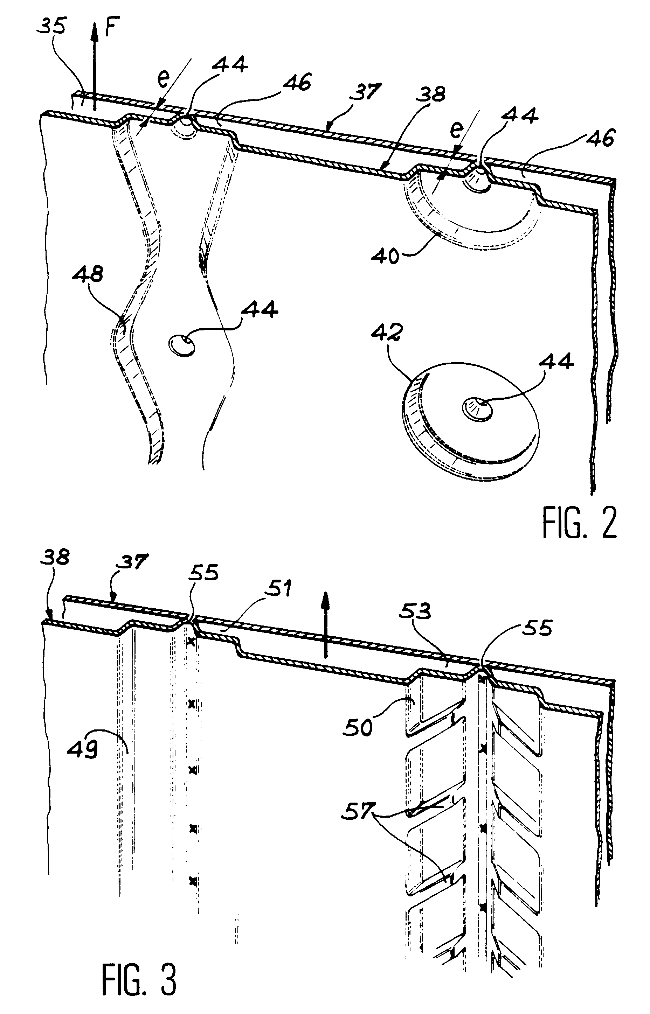

Sur la figure 2 on a représenté en vue partielle, schématique et en perspective, un canal 35 d'évaporateur à plaques selon l'invention. Ce canal est constitué de deux plaques planes 37 et 38 entre lesquelles s'écoule le liquide à vaporiser selon la direction de la flèche F. Conformément à l'invention, on a représenté deux modes particuliers de mise en oeuvre des espaces confinés obtenus dans le cas de la figure 2 par des techniques classiques d'emboutissage.

A cet effet, la partie droite de la figure 2 montre les empreintes en creux 40 et 42 de cet emboutissage, empreintes qui sont formées sur la plaque 38 et comportent une zone centrale 44 dont la paroi est déformée jusqu'à venir au contact de la plaque 37 du canal 35. Il en résulte par conséquent des espaces confinés dans le canal 35 tel que l'espace 46 de la figure 2. Dans ce mode de mise en oeuvre, les espaces confinés 46, sont localisés de façon discrète à certains endroits de la plaque 38 et bien entendu, ils répondent, quant à leur épaisseur et quant à leur répartition sur cette plaque 38, aux critères généraux énoncés précédemment pour l'invention. Notamment, l'épaisseur e de l'espace confiné est compris entre le diamètre d'une bulle de vapeur du liquide circulant et le cinquième environ de ce diamètre ; par ailleurs, le rapport de la surface d'échange de la plaque 38 occupé par les espaces confinés 46 est compris entre 0,3 et 0,9 fois la surface totale de la plaque 38.

Sur la partie gauche de la même figure 2, on a représenté une variante de mise en oeuvre de ces espaces confinés dont l'un d'entre eux 48 a la forme d'une bande longitudinale s'étendant dans le sens de l'écoulement du liquide (flèche F), et qui comporte une succession continue de parties élargies et de parties rétrécies. Bien entendu les mêmes critères d'épaisseur e et de surface que précédemment sont toujours remplies.

De toute façon, il est bien entendu que les deux modes de réalisation précédents donnés en se référant à la figure 2, ne sont que des exemples illustratifs de dessins d'emboutissage sur la plaque 38 et que l'homme de métier est à même dans chaque cas particulier, de concevoir d'autres formes et d'autres répartitions que celles données sur cette figure pour les zones embouties localisées.

La figure 3 montre une variante de forme possible d'emboutissage des plaques 37 et 38 d'un canal d'écoulement du liquide à vaporiser. Sur cette figure 3, on a représenté les emboutissages en creux 49 et 50 qui définissent les espaces confinés 51 et 53, les emboutissages 49 et 50 comportant une arête médiane 55 qui vient en contact avec la plaque plane arrière 36. Dans la structure du mode de réalisation de la partie droite de la figure 3, on a également prévu des ouies 57 pour l'entrée du liquide à vaporiser dans l'espace confiné 53. Comme dans les réalisations précédentes, les conditions de surface des zones embouties 49 et 50 par rapport à la surface totale de la plaque 38 et l'épaisseur des espaces confinés 51 et 53 répondent aux impératifs définis d'une façon générale dans la présente demande.

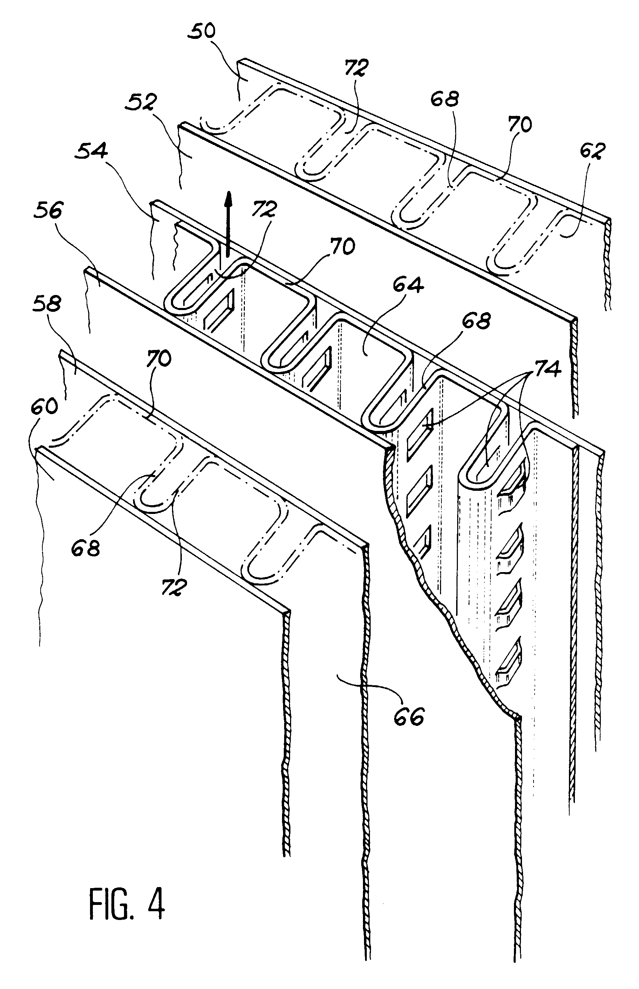

La figure 4 représente la réalisation d'un évaporateur à plaques conforme à l'invention dans la première variante d'application comportant une plaque secondaire. Sur la figure 4 qui est une vue schématique éclatée en perspective, d'un morceau de structure d'un évaporateur à plaques, on reconnaît les plaques 50, 52, 54, 56, 58 et 60 qui délimitent les canaux 62, 64 et 66 utilisés pour la circulation du liquide à vaporiser. Conformément à cette variante de mise en oeuvre, les canaux précédents 62, 64 et 66 sont équipés d'une plaque secondaire métallique 68 en accordéon, prenant appui selon des portions de trajet 70 sur l'une des plaques de l'évaporateur à laquelle il peut être soudé. Conformément à l'invention, la plaque secondaire 68 épouse la forme d'une structure en accordéon avec des espaces confinés 72 qui servent au passage du liquide à vaporiser et remplissent la fonction indiquée précédemment. Bien entendu, ces espaces confinés 72 ont une épaisseur dans le sens perpendiculaire à celui de l'écoulement repéré par la flèche F qui est toujours, comme dans tous les exemples de l'invention, comprise entre la taille d'une bulle de vapeur et le cinquième environ de celle-ci. Dans les canaux 62 et 66, les plaques secondaires sont des plaques lisses sans aucun aménagement de leurs surfaces latérales. Dans le canal 64 au contraire, on a représenté une variante perfectionnée dans laquelle pour contraindre la plus grande partie possible du liquide à vaporiser à emprunter le trajet des espaces confinés 72, on a muni les parois latérales de la plaque secondaire 68 d'un certain nombre d'ouies 74 destinés à l'entrée du liquide de refroidissement dans les parties restreintes 72 de chacun des canaux. Ces ouies permettent également un meilleur dégagement de la vapeur produite dans les zones confinées. Ces ouies 74 peuvent aussi être fabriquées par découpe et emboutissage à partir de la plaque métallique secondaire 68 elle-même.

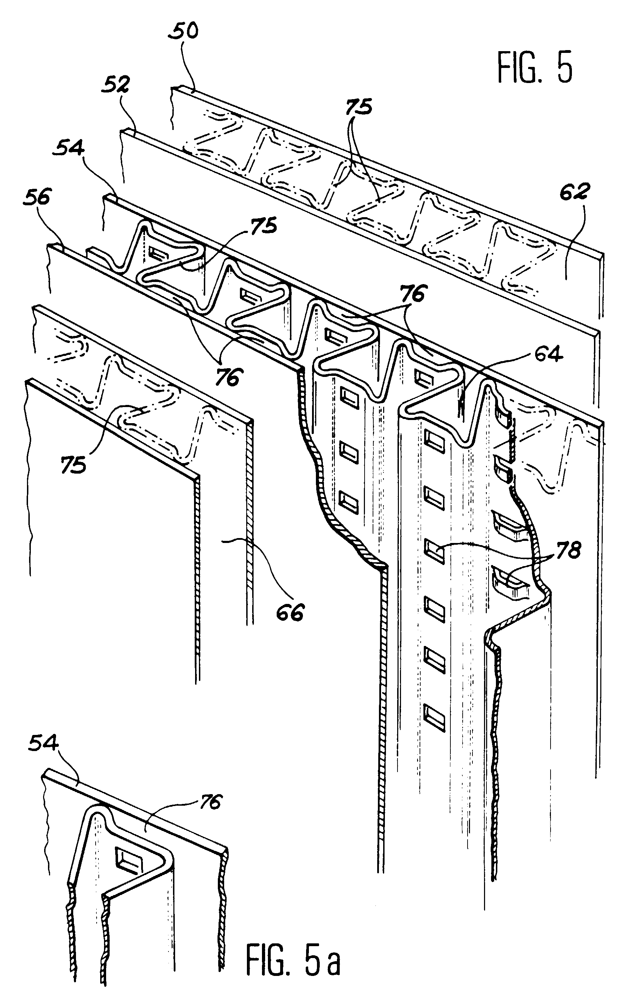

Dans l'exemple des figures 5 et 5a, où l'on retrouve les canaux 62, 64 et 66 de circulation du liquide à vaporiser, la plaque métallique secondaire 75 est déployée également en accordéon entre les plaques primaires constituant les parois de chaque canal, mais selon des formes différentes visibles sur ces figures 5, 5a et aptes à réaliser les espaces confinés 76 entre ladite plaque métallique secondaire 75 et les parois 54 et 56 du canal considéré. Comme dans l'exemple précédent, un système d'ouies 78 obtenu par découpe latérale de la plaque métallique secondaire 75 permet de contraindre la plus grande partie possible du liquide à vaporiser, de s'introduire au travers de ces ouies 78 dans les espaces confinés 76.

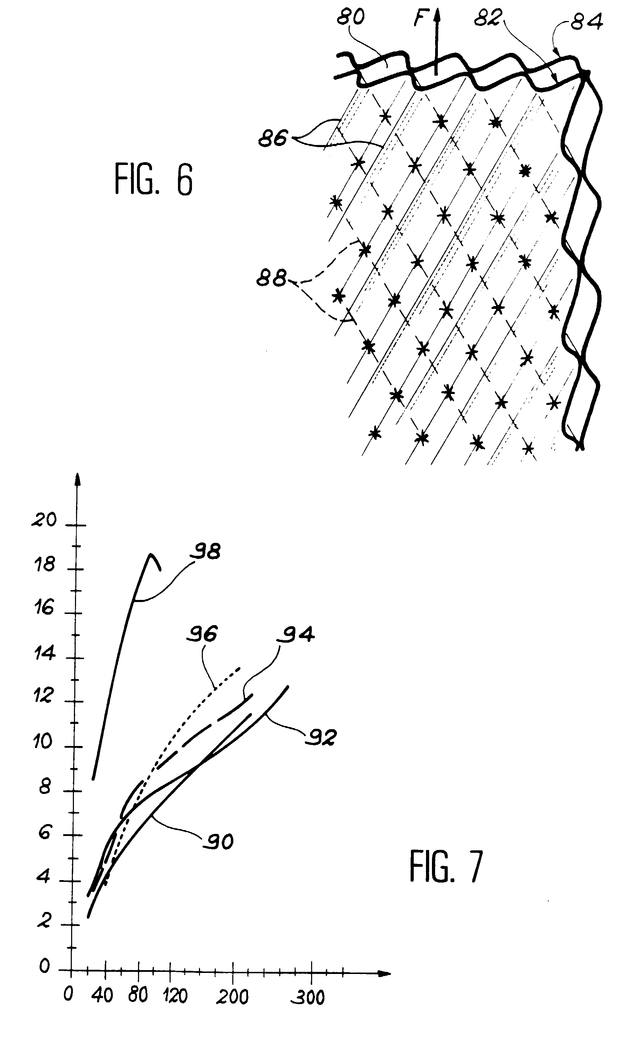

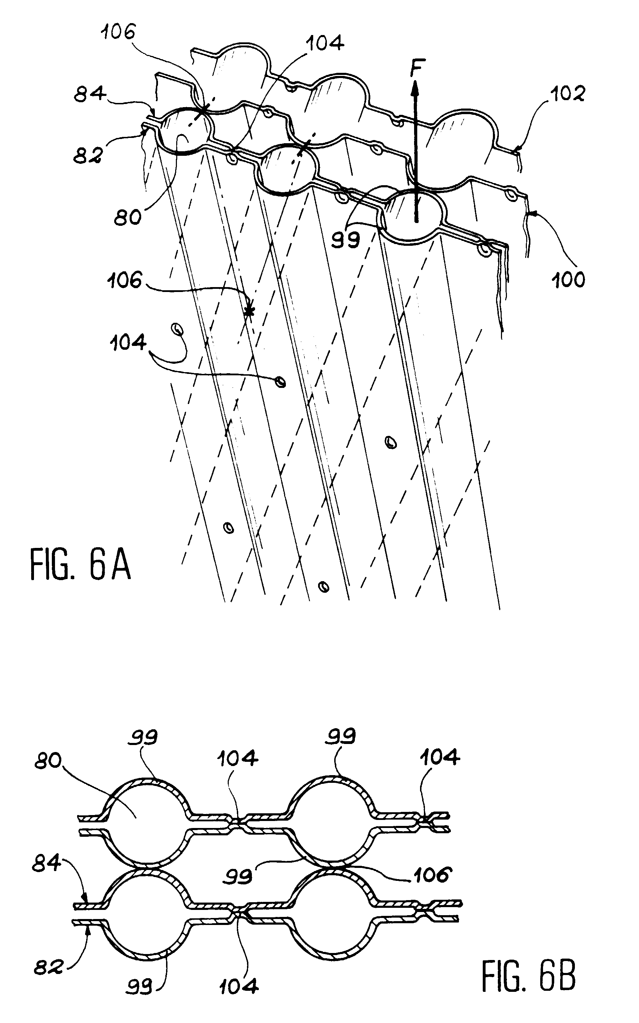

La figure 6 représente un mode particulier de mise en oeuvre de l'invention dans lequel un canal 80 d'écoulement du liquide à vaporiser entre deux plaques 82 et 84 est réalisé en choisissant pour ces deux plaques dont la forme générale est plane, une structure de surface ondulée avec le même pas d'ondulation pour chacune d'entre elles. Dans ce mode de mise en oeuvre, les directions d'ondulations 86 de la plaque 82 et 88 de la plaque 84 font entre elles un angle aigu, voisin par exemple de 30° dans l'exemple décrit. Il en résulte ainsi une structure visible sur la figure 6 dans laquelle l'espace entre les deux plaques est assimilable à des chicanes reliant entre elles des espaces confinés d'épaisseurs variables selon une loi régulière.

Sur les figures 6a (vue en perspective) et 6b (vue en coupe selon l'extrémité supérieure de la figure 6a) on a illustré un mode de mise en oeuvre de l'invention, dérivé de celui de la figure 6, dans lequel les canaux 80 sont réalisés à l'aide de surfaces cylindriques 99 embouties dans les plaques 82 et 84 selon deux directions faisant entre elles un angle aigu. Les deux plaques 100 et 102 de la figure 6a sont représentées écartées l'une de l'autre pour permettre de mieux voir l'inclinaison mutuelle des portions de plaques embouties selon des surfaces cylindriques.

Des points de contact 104 permettent une fixation des tôles en regard l'une de l'autre, telles que 82 et 84 ou 100 et 102. Des points de contact 106 désignent les points d'appui des surfaces cylindriques 99 les unes contre les autres sur la paroi d'échange.

La figure 7 représente enfin les courbes de variation du coefficient d'échange thermique entre la paroi d'un évaporateur conforme à l'invention et le fluide à vaporiser en fonction du flux de chaleur transmis par chaque plaque au niveau des espaces confinés. Le coefficient d'échange thermique représenté en ordonnées est exprimé en kW/m$^2$/°C alors que le flux thermique en abscisses est exprimé en KW/m$^2$. Sur le schéma on a représenté plusieurs courbes 90, 92, 94, 96 et 98 qui représentent respectivement :

- la courbe 90 la fonction d'échange d'un évaporateur de type classique sans espace confiné ;
- la courbe 92 le coefficient d'échange d'un évaporateur dans lequel des espaces confinés sont prévus avec une épaisseur de 5 mm ;
- la courbe 94 le coefficient d'échange d'un évaporateur selon l'invention dans lequel les espaces confinés ont une épaisseur de 3,75 mm ;
- la courbe 96 le coefficient d'échange d'un évaporateur à plaques selon l'invention dans lequel les espaces confinés ont une épaisseur de 2,5 mm et
- la courbe 98 les variations du coefficient d'échange d'un évaporateur conforme à l'invention dans lequel les espaces confinés ont une épaisseur de 1 mm.

Ce faisceau de courbes montre nettement le progrès technique apporté par l'invention et l'augmentation corrélative du taux d'échange thermique qui en résulte avec des progrès spécialement spectaculaires pour l'épaisseur de 1 mm donnée aux espaces confinés.

**Revendications**

1. Evaporateur à plaques à hautes performances thermiques fonctionnant en régime d'ébullition nucléée ou mixte d'un liquide déterminé, comprenant des canaux d'écoulement de fluide chaud et des canaux d'écoulement d'un liquide à vaporiser déterminé, ces canaux étant définis par les casiers d'une structure de plaques métalliques planes et parallèles (37, 38) juxtaposées, caractérisé en ce que, sur une partie comprise entre 0,3 et 0,9 fois leur étendue, les canaux (35) du liquide à vaporiser comprennent des espaces confinés (46, 72, 76), localisés de place en place, dont l'épaisseur restreinte offerte à l'écoulement est au plus égale à une valeur D représentant le diamètre d'une bulle de vapeur du liquide à vaporiser déterminé et se formant sur la paroi d'une plaque chaude lors de l'ébullition nucléée, cette valeur D [m] étant donnée par la formule :

$$D = 1,83 \, (\sigma/9,81\rho)^{\frac{1}{2}}$$

où σ [N/m] et ρ [kg/m$^3$] sont respectivement la tension superficielle et la masse volumique du liquide à vaporiser déterminé.

2. Evaporateur à plaques selon la revendication 1, caractérisé en ce que l'épaisseur de ces espaces confinés (46) est comprise entre le diamètre d'une bulle de vapeur et le cinquième de ce diamètre.

3. Evaporateur à plaques selon l'une des revendications 1 ou 2 précédentes, caractérisé en ce que les espaces confinés (46) sont réalisés par des emboutissages localisés (40, 42, 48) de l'une des plaques (38) de chaque canal de liquide à vaporiser, une partie (44) de cette plaque emboutie (38) venant en contact ponctuel ou rectiligne avec la plaque associée (37) du même canal (35) pour augmenter la rigidité mécanique de la structure.

4. Evaporateur à plaques selon l'une des revendications 1 ou 2 précédentes, caractérisé en ce que les espaces confinés (72, 76) sont réalisés à l'aide d'une surface d'échange secondaire constituée par une plaque métallique secondaire (68, 75) de forme appropriée pour se déployer en accordéon, dans le canal (64) du liquide à vaporiser, en prenant appui alternativement sur chacune des parois (54, 56) de ce canal.

5. Evaporateur à plaques selon la revendication 4, caractérisé en ce que les espaces confinés (72) sont réalisés uniquement sur la plaque secondaire.

6. Evaporateur à plaques selon la revendication 4, caractérisé en ce que les espaces confinés (76) sont réalisés entre la paroi (54, 56) du canal et la plaque secondaire (75).

7. Evaporateur à plaques selon l'une quelconque des revendications 5 et 6 précédentes, caractérisé en ce que des ouies d'entrée (74, 78) du liquide à vaporiser et de sortie de vapeur sont prévues, de place en place, sur la plaque secondaire (68, 75) en direction des espaces confinés.

8. Evaporateur à plaques selon la revendication 1, caractérisé en ce que le canal d'écoulement (80) du liquide à vaporiser est réalisé par juxtaposition de deux plaques ondulées (82, 84) de même pas d'ondulation, mais dont les directions d'ondulation (86, 88) font un angle aigu l'une avec l'autre.


## Patentansprüche

1. Thermischer Hochleistungsplattenverdampfer, im Blasensieden- oder Mischbetrieb mit einer bestimmten Flüssigkeit arbeitend, Strömungskanäle für warmes Fluid und Strömungskanäle für eine bestimmte zu verdampfende Flüssigkeit umfassend, wobei diese Kanäle definiert werden durch die Fächer einer Struktur aus nebeneinander angeordneten, flachen und parallelen Platten (37, 38), **dadurch gekennzeichnet,** daß auf einem Teil, enthalten zwischen 0,3- und 0,9mal ihre Ausdehnung, die Kanäle (35) der zu verdampfenden Flüssigkeit eingeschlossene Räume (46, 72, 76) enthalten, stellenweise lokalisiert, deren beschränkte, für die Strömung verfügbare Dicke höchstens gleich einem Wert D ist, der den Durchmesser einer Dampfblase der bestimmten bzw. festgelegten, zu verdampfenden Flüssigkeit darstellt, die sich während des Blasensiedens auf der Wand einer heißen Platte bildet, wobei dieser Wert D [m] geliefert wird durch die Formel:

$$D = 1{,}83 \, (\sigma/9{,}81\rho)^{\frac{1}{2}}$$

wobe σ [N/m] und ρ [kg/m$^3$] die Oberflächenspannung beziehungsweise die volumenbezogene Masse der festgelegten, zu verdampfenden Flüssigkeit ist.

2. Plattenverdampfer nach Anspruch 1, dadurch gekennzeichnet, daß die Dicke dieser eingeschlossenen Räume (46) enthalten ist zwischen dem Durchmesser einer Dampfblase und einem Fünftel dieses Durchmessers.

3. Plattenverdampfer nach einem der vorangehenden Ansprüche 1 oder 2, dadurch gekennzeichnet, daß die eingeschlossenen Räume (46) hergestellt wurden durch lokalisiertes Tiefziehen (40, 42, 48) von einer der Platten (38) jedes Kanals von zu verdampfender Flüssigkeit, wobei ein Teil (44) dieser tiefgezogenen Platte (38) in punktförmigen oder geradlinigen Kontakt mit der zugeordneten Platte (37) desselben Kanals (35) kommt, um die mechanische Steifigkeit der Struktur zu erhöhen.

4. Plattenverdampfer nach einem der vorangehenden Ansprüche 1 oder 2, dadurch gekennzeichnet, daß die eingeschlossenen Räume (72, 76) hergestellt werden mit Hilfe einer Sekundäraustauschflache, gebildet durch eine Sekundarmetallplatte (68, 75) mit einer geeigneten, sich akkordeonartig ausbreitenden Form, in dem Kanal (64) der zu verdampfenden Flüssigkeit, sich dabei wechselweise auf jeder der Wände (54, 56) dieses Kanals abstützend.

5. Plattenverdampfer nach Anspruch 4, dadurch gekennzeichnet, daß die eingeschlossenen Räume (72) nur an der Sekundärplatte realisiert sind.

6. Plattenverdampfer nach Anspruch 4, dadurch gekennzeichnet, daß die eingeschlossenen Räume (76) zwischen der Wand (54, 56) des Kanals und der Sekundärplatte (75) hergestellt sind.

7. Plattenverdampfer nach einem der vorangehenden Ansprüche 5 und 6, dadurch gekennzeichnet, daß Öffnungen (74, 78) zum Eintritt der zu verdampfenden Flüssigkeit und zum Austritt von Dampf vorgesehen sind, stellenweise, an den Sekundärplatten (68, 75) in Richtung der eingeschlossenen Räume.

8. Plattenverdampfer nach Anspruch 1, dadurch gekennzeichnet, daß der Strömungskanal (80) der zu verdampfenden Flüssigkeit hergestellt wird durch Aneinanderfügen von zwei gewellten Platten (82, 84) mit derselben Welligkeitsteilung, wobei aber die Welligkeitsrichtungen (86, 88) miteinander einen spitzen Winkel bilden.


## Claims

1. Plate evaporator having high thermal performances and operating under conditions of nucleate or mixed boiling of a specific liquid, comprising hot-fluid flow ducts and ducts for the flow of a specific liquid to be evaporated, these ducts being defined by the compartments of a structure of juxtaposed plane and parallel metal plates (37, 38), characterized in that, over a part amounting to between 0.3 and 0.9 times their extent, the ducts (35) for the liquid to be evaporated comprise confined spaces (46, 72, 76) which are localized from place to place and of which the restricted thickness offered to the flow is at most equal to a value D representing the diameter of a vapour bubble of the specific liquid to be evaporated, the said bubble forming on the wall of a hot plate during nucleate boiling, this value D [m] being given by the formula:

$$D = 1.83\,(\sigma/9.81\rho)^{\frac{1}{2}},$$

where $\sigma$ [N/m] and $\rho$ [kg/m$^3$] are respectively the surface tension and the density of the specific liquid to be evaporated.

2. Plate evaporator according to Claim 1, characterized in that the thickness of these confined spaces (46) is between the diameter of a vapour bubble and one-fifth of this diameter.

3. Plate evaporator according to one of the preceding Claims 1 or 2, characterized in that the confined spaces (46) are produced by means of localized pressings (40, 42, 48) of one of the plates (38) of each duct for the liquid to be evaporated, a part (44) of this pressed plate (38) coming into punctiform or rectilinear contact with the associated plate (37) of the same duct (35), in order to increase the mechanical rigidity of the structure.

4. Plate evaporator according to one of the preceding Claims 1 or 2, characterized in that the confined spaces (72, 76) are produced by means of a secondary exchange surface consisting of a secondary metal plate (68, 75) of a shape suitable for being deployed in the form of a concertina in the duct (64) for the liquid to be evaporated, by bearing alternately on each of the walls (54, 56) of this duct.

5. Plate evaporator according to Claim 4, characterized in that the confined spaces (72) are produced solely on the secondary plate.

6. Plate evaporator according to Claim 4, characterized in that the confined spaces (76) are produced between the wall (54, 56) of the duct and the secondary plate (75).

7. Plate evaporator according to either one of the preceding Claims 5 and 6, characterized in that louvre windows (74, 78) for the inlet of the liquid to be evaporated and for the outlet of vapour are provided from place to place on the secondary plate (68, 75) in the direction of the confined spaces.

8. Plate evaporator according to Claim 1, characterized in that the flow duct (80) for the liquid to be evaporated is produced by the juxtaposition of two corrugated plates (82, 84) which have the same corrugation pitch, but the corrugation directions (86, 88) of which form an acute angle with one another.

FIG. 1

FIG. 2

FIG. 3

FIG. 4

FIG. 5

FIG. 5a

FIG. 6

FIG. 7

FIG. 6A

FIG. 6B